# EUROPÄISCHE PATENTSCHRIFT

(11) **EP 2 649 600 B1**
(45) Veröffentlichungstag und Bekanntmachung des Hinweises auf die Patenterteilung: **16.01.2019**
(21) Anmeldenummer: 11770092.2
(22) Anmeldetag: 12.10.2011
(51) Int. Cl.: G08C 19/02, H02P 6/00

(54) **ELEKTRONISCH KOMMUTIERTER MOTOR**
ELECTRONICALLY COMMUTATED MOTOR
MOTEUR À COMMUTATION ÉLECTRONIQUE

(30) Priorität: 09.12.2010 DE 102010062723
(43) Veröffentlichungstag der Anmeldung: 16.10.2013
(73) Patentinhaber: Robert Bosch GmbH, 70442 Stuttgart (DE)
(72) Erfinder: KNECHT, Gerhard, 76473 Iffezheim (DE)
(86) Internationale Anmeldenummer: PCT/EP2011/067754
(87) Internationale Veröffentlichungsnummer: WO 2012/076218

(56) Entgegenhaltungen:
- EP-A1- 0 564 330
- EP-A2- 1 054 506
- US-A- 4 430 576

## Beschreibung

### Technisches Gebiet

Die Erfindung betrifft Elektromotoren, insbesondere elektronisch kommutierte Elektromotoren zum Einsatz in Anwendungen für Gleichstrommotoren.

### Stand der Technik

Bei Elektromotoren für unterschiedliche Anwendungen, insbesondere Peripherie-Anwendungen, werden bisher überwiegend Gleichstrommotoren eingesetzt, die in der Regel bürstenkommutiert sind. Elektronisch kommutierte Motoren sind dagegen relativ wenig verbreitet und werden in der Regel nur bei größeren Leistungen eingesetzt. Dies liegt daran, dass trotz der Vorteile elektronisch kommutierter Motoren im Hinblick auf Lebensdauer, Energieeffizienz und Geräuschentwicklung die Kosten der nötigen Ansteuerelektronik zur Ansteuerung des elektronisch kommutierten Motors bisher noch zu hoch sind.

Es ist daher Aufgabe der vorliegenden Erfindung, eine Motoreinheit mit einem elektronisch kommutierten Motor bereitzustellen, welche einen bürstenkommutierten Elektromotor kostengünstig ersetzen kann.

Das Dokument EP 1 054 506 A2 offenbart einen drehzahlvariablen elektronisch kommutierten Elektromotor.

### Offenbarung der Erfindung

Diese Aufgabe wird durch die elektrische Motoreinheit gemäß Anspruch 1 und durch das Verfahren gemäß Anspruch 10 gelöst.

Weitere vorteilhafte Ausgestaltungen sind in den Unteransprüchen angegeben.

Gemäß einem ersten Aspekt ist eine elektrische Motoreinheit vorgesehen. Die Motoreinheit umfasst:
- ein Gehäuse; -
- einen in dem Gehäuse aufgenommenen elektronisch kommutierten Motor; und
- eine Steuereinheit, um eine an die Motoreinheit angelegte Versorgungsgleichspannung in Phasenspannungen zum Ansteuern des elektronisch kommutierten Motors umzuwandeln,
wobei die Steuereinheit eine in die Gleichspannung kodierte Information empfängt und den elektronisch kommutierten Motor abhängig von der Information ansteuert,
wobei die Motoreinheit (10) die Versorgungsgleichspannung über Anschlussleitungen erhält, wobei die Steuereinheit (14) die Versorgungsgleichspannung auf den Anschlussleitungen mit einem Signal moduliert, dessen Frequenz von der Drehzahl des elektronisch kommutierten Motors (12) abhängt.

Eine derartige universelle elektrische Motoreinheit verhält sich nach außen wie ein bürstenkommutierter Motor, bietet gegenüber bürstenkommutierten Motoren aber eine Vielzahl von Vorteilen, wie beispielsweise erhöhte Lebensdauer, niedrigere Betriebsgeräusche, eine bessere Energieeffizienz und eine kompaktere Bauweise.

Die elektrische Motoreinheit kann, ohne dass die Steuerelektronik individuell angepasst werden müsste, in den verschiedensten Bereichen eingesetzt werden, in denen bisher aus Kostengründen noch bürstenkommutierte Motoren zum Einsatz kamen, beispielsweise in unterschiedlichen Anwendungsbereichen in Kraftfahrzeugen, von der Sitzverstellung über Motorkühlgebläse, Pumpen für ABS/ESP-Systeme, variable Ventilsteuerungen (WT) bis hin zu Antrieben für Ölpumpen und dergleichen, oder auch in anderen Bereichen, beispielsweise bei Rohrmotor-Antrieben für Rollläden, Vakuum- oder Druckpumpen, Förderrollen oder bei Verstellmechanismen von Pflegebetten.

Es kann vorgesehen sein, dass eine Umkehr der Polarität der Versorgungsgleichspannung eine Umkehr der Drehrichtung des elektronisch kommutierten Motors bewirkt. Somit kann bei der erfindungsgemäßen Motoreinheit, wie bei einem bürstenkommutierten Motor, die Drehrichtung einfach durch Wechsel der Polarität der Versorgungsspannung geändert werden.

Die Information kann durch das Vorzeichen und/oder durch die Spannungshöhe der Versorgungsgleichspannung angegeben sein, so dass durch Änderung der Spannungshöhe und/oder des Vorzeichens der Gleichspannung vielfältige Steuer-Anweisungen an die Motoreinheit gesendet werden können.

Gemäß einer Ausführungsform der vorliegenden Erfindung erhält die Motoreinheit die Versorgungsgleichspannung über Anschlussleitungen, wobei die Steuereinheit die Versorgungsgleichspannung auf den Anschlussleitungen mit einem Signal moduliert, dessen Frequenz von der Drehzahl des elektronisch kommutierten Motors abhängt, insbesondere proportional zu dieser ist. Ein derartiges Signal kann als Ripple-Signal dienen und zur Drehzahl- oder Positionserfassung des elektronisch kommutierten Motors verwendet werden, so dass vorhandene Bauteile zur Drehzahl- oder Positionserfassung eines bürstenkommutierten Motors auch weiterhin mit der Motoreinheit gemäß der vorliegenden Erfindung verwendet werden können.

Die Steuereinheit kann die Drehzahl des elektronisch kommutierten Motors auf einen Maximalwert begrenzen. Hierdurch kann eine verbesserte Lebensdauer des elektronisch kommutierten Motors erreicht werden. Weiterhin kann vermieden werden, dass aufgrund von Grenzfällen ein elektronisch kommutierter Motor mit überdimensionierten Leistungscharakteristiken verwendet werden muss.

Die Begrenzung der Drehzahl kann dabei durch Begrenzung der mittleren Spannung der Phasenspannungen durchgeführt werden, oder es ist denkbar, die Begrenzung der Drehzahl durch Begrenzung des bestromten Anteils der Phasenspannungen durchzuführen. Mit beiden Verfahren ist eine Begrenzung der maximalen Drehzahl des elektronisch kommutierten Motors erreichbar, wobei bei Begrenzung des bestromten Anteils der Phasenspannungen geringere Verlustleistungen auftreten.

Die Steuereinheit kann über eine Modulation der Spannung in den Gleichspannungs-Leitungen programmierbar sein. Mittels einer derartigen Power Line Kommunikation können beispielsweise die maximale Drehzahl oder die Laufrichtung des elektronisch kommutierten Motors programmiert werden.

Um die Geräuschentwicklung der elektrischen Motoreinheit weiter zu verringern und um einen Lastwechselreaktionen im Betrieb des elektronisch kommutierten Motors zu vermeiden, kann vorgesehen sein, dass die Phasenspannungen jeweils einen trapezförmigen Spannungsverlauf aufweisen.

Zur Lageerkennung und Drehzahlbestimmung des elektronisch kommutierten Motors kann ein Hall-Sensor vorgesehen sein, um zu ermöglichen, dass der elektronisch kommutierte Motor gegen Last anläuft, sobald die elektrische Motoreinheit an eine Gleichspannungs-Zufuhr angeschlossen wird. Alternativ ist denkbar, die Lageerkennung des elektronisch kommutierten Motors mittels eines sensorlosen Verfahrens durchzuführen.

Gemäß einem weiteren Aspekt ist ein Verfahren zum Betrieb eines elektronisch kommutierten Motors vorgesehen. Das Verfahren umfasst:
- Umwandeln einer an die Motoreinheit angelegte Versorgungsgleichspannung in Phasenspannungen zum Ansteuern des elektronisch kommutierten Motors;
- Empfangen einer in die Gleichspannung kodierte Information; und
- Ansteuern des elektronisch kommutierten Motors abhängig von der Information:
- wobei die Motoreinheit (10) die Versorgungsgleichspannung über Anschlussleitungen erhält, wobei die Steuereinheit (14) die Versorgungsgleichspannung auf den Anschlussleitungen mit einem Signal moduliert, dessen Frequenz von der Drehzahl des elektronisch kommutierten Motors (12) abhängt.

### Kurzbeschreibung der Zeichnungen

Im Folgenden werden Ausführungsformen der vorliegenden Erfindung detailliert anhand der beigefügten Figuren beschrieben. Es zeigen:
Fig. 1 eine schematische Darstellung des Aufbaus einer universellen Motoreinheit gemäß der vorliegenden Erfindung;
Fig. 2 ein schematisches Schaltbild einer universellen Motoreinheit gemäß einer ersten Ausführungsform der vorliegenden Erfindung;
Fig. 3 ein schematisches Schaltbild einer universellen Motoreinheit gemäß einer zweiten Ausführungsform der vorliegenden Erfindung;
Fig. 4 ein schematisches Schaltbild einer universellen Motoreinheit gemäß einer dritten Ausführungsform der vorliegenden Erfindung; und
Fig. 5 ein schematisches Schaltbild einer universellen Motoreinheit gemäß einer vierten Ausführungsform der vorliegenden Erfindung

### Beschreibung von Ausführungsformen

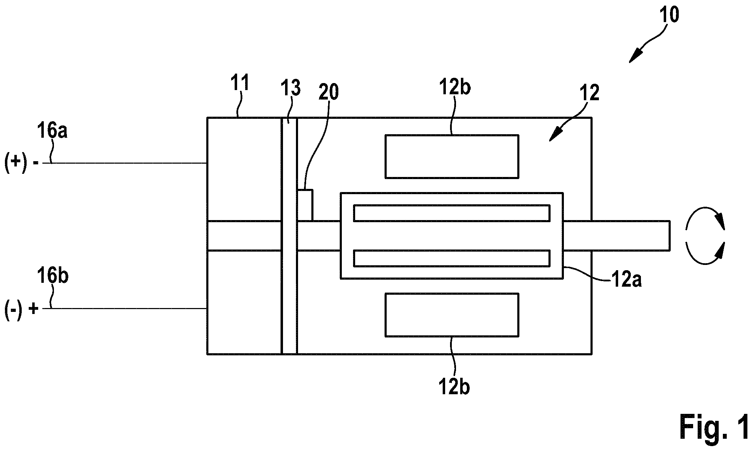

Fig. 1 zeigt den schematischen Aufbau einer universellen Motoreinheit 10, bei welcher in einem zylinderförmigen Gehäuse 11 ein elektronisch kommutierter Motor 12 und eine Leiterplatte 13 aufgenommen sind. Der elektronisch kommutierte Motor 12 umfasst einen Rotor 12a und einen Stator 12b, wobei der Rotor um eine Längsachse des zylinderförmigen Gehäuses 11 drehbar ist. Die Leiterplatte 13 ist in Form einer runden Scheibe ausgebildet und ist senkrecht zur Längsachse des Gehäuses (und damit auch senkrecht zur Drehachse des Rotors 12a) angeordnet.

Auf der Leiterplatte 13 ist ein Hall-Sensor 20 zur Lagebestimmung des Rotors 12a angeordnet. Anstelle des Hall-Sensors 20 kann auch ein GMR-Sensor vorgesehen sein, oder die Lagebestimmung des Rotors 12a kann durch ein sensorloses Verfahren durchgeführt werden. Das Gehäuse 11 weist Anschlüsse auf, um die Motoreinheit 10 an Anschlussleitungen 16a, 16b anzuschließen.

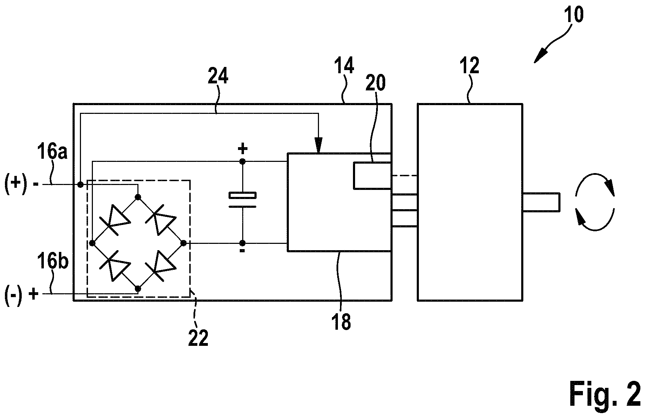

Wie in Fig. 2 gezeigt, umfasst die universelle Motoreinheit 10 gemäß einer ersten Ausführungsform der vorliegenden Erfindung weiterhin eine elektronische Steuereinheit 14, welche auf der Leiterplatte 13 angeordnet und an die Anschlussleitungen 16a, 16b angeschlossen ist.

Ein elektronisches Steuermodul 18 der Steuereinheit 14, welches beispielsweise ein Leistungsmodul, z.B. ein B6-Modul mit drei Inverterschaltungen für einen dreiphasigen Motor, umfasst, wandelt die anliegende Gleichspannung in Phasenspannungen zum Antrieb des elektronisch kommutierten Motors 12 um. Hierbei kann sowohl eine Blockkommutierung, Trapezkommutierung als auch eine Sinuskommutierung durchgeführt werden.

Als Taktfrequenz kann dabei beispielsweise eine Frequenz von 20kHz vorgegeben sein und die ausgegebenen Phasenspannungen können mittels Pulsweitenmodulation auf einen gewünschten mittleren Spannungswert zum Antrieb des elektronisch kommutierten Motors 12 eingestellt werden.

Der Hall-Sensor 20 ermöglicht eine Lageerkennung des Rotors des elektronisch kommutierten Motors 12, welche für den Anlauf des elektronisch kommutierten Motors 12 genutzt werden kann, so dass der elektronisch kommutierte Motor 12 direkt nach dem Anlegen einer Versorgungsgleichspannung an die Anschlussleitungen 16a, 16b mit maximaler Leistung anläuft bzw. hoher Dynamik anlaufen kann. Alternativ können auch sensorlose Verfahren zur Rotorlageerkennung verwendet werden.

Um den Anschluss der Motoreinheit 10 an die Anschlussleitungen 16a, 16b mit beiden möglichen Anschlusspolaritäten zu ermöglichen, ist eine Schaltgruppe 22 vorgesehen, welche in dieser Ausführungsform als Dioden-Brückenschaltung 22 ausgeführt ist. Die Dioden-Brückenschaltung 22 ermöglicht eine einheitliche Laufrichtung des elektronisch kommutierten Motors 12, selbst wenn die universelle Motoreinheit 10 mit umgekehrter Polarität an die Anschlussleitungen 16a, 16b angeschlossen ist.

Weiterhin kann vorgesehen sein, dass trotz des Vorsehens der Dioden-Brückenschaltung 22 die Polarität der anliegenden Versorgungsgleichspannung bestimmt wird, z.B. mit Hilfe einer Leitung 24, und abhängig von der Polarität der anliegenden Versorgungsgleichspannung der Motor angesteuert wird. Beispielsweise kann abhängig von der Polarität die Drehrichtung festgelegt werden und/oder es können je nach Polung der Versorgungsgleichspannung unterschiedliche Drehzahlen in der Steuereinheit 14 eingestellt werden

Weiterhin kann die Leitung 24 als eine Kommunikationsleitung 24 ausgebildet sein, welche es ermöglicht, die an den Anschlussleitungen 16a, 16b anliegende Versorgungsgleichspannung zu modulieren und somit von der universellen Motoreinheit 10 Signale an andere Komponenten, die an die Anschlussleitungen 16a, 16b angeschlossen sind, auszugeben (Power Line Kommunikation).

Beispielsweise ist es denkbar, dass die Steuereinheit 14 oder das Steuermodul 18 ein Ripple-Signal erzeugen, welches das Ripple-Signal eines bürstenkommutierten Motors simuliert, so dass die Drehzahl oder die Position des elektronisch kommutierten Motors 12 mit vorhandenen Ripple-Counter-Schaltungen bestimmt werden kann. Dies ermöglicht es, einen vorhandenen bürstenkommutierten Motor durch die universelle Motoreinheit 10 gemäß der vorliegenden Erfindung zu ersetzen, ohne dass andere Bauteile und Steuergeräte an den geänderten Motortyp angepasst werden müssen.

Bei der universellen Motoreinheit 10 tritt außerdem beim Motoranlauf kein Blockierstrom in den Anschlussleitungen 16a, 16b auf, welcher die Erfassung des Ripple-Signals erschweren würde. Somit kann, im Unterschied zu einem Bürstenmotor, bei der erfindungsgemäßen Motoreinheit 10 auch während des Anlaufens des elektronisch kommutierten Motors 12 die Drehzahl präzise bestimmt werden.

Die Drehzahl kann hierbei in Abhängigkeit des Betrags der anliegenden Gleichspannung eingestellt werden, so dass durch eine Änderung der Gleichspannung die Drehzahl des elektronisch kommutierten Motors 12 geändert werden kann.

Die Drehzahl des elektronisch kommutierten Motors 12 kann weiterhin über Einstellung der mittleren Spannungswerte der von dem B6-Modul 18 der Steuereinheit 14 bereitgestellten Phasenspannungen auf einen Maximalwert begrenzt werden. Alternativ ist denkbar, die Länge des bestromten Anteils jeder Phasenspannung zu kürzen, um die Drehzahl des elektronisch kommutierten Motors 12 zu begrenzen.

Um das Laufgeräusch des elektronisch kommutierten Motors 12 zu verringern und um Lastwechsel des elektronisch kommutierten Motors 12 abzumildern, kann vorgesehen sein, dass die Phasenspannungen zum Antrieb des elektronisch kommutierten Motors 12 jeweils einen trapezförmigen Spannungsverlauf aufweisen.

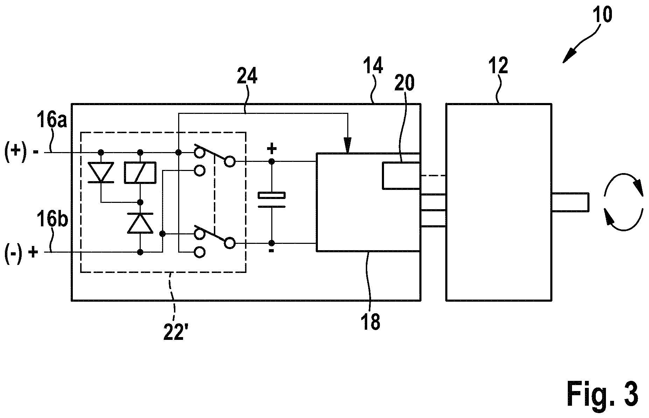

Fig. 3 zeigt eine zweite Ausführungsform der universellen Motoreinheit 10 der vorliegenden Erfindung, wobei die Dioden-Brückenschaltung 22 der ersten Ausführungsform durch eine Relais-Schaltung 22' ersetzt ist.

Die Relais-Schaltung 22' erfüllt die gleiche Funktion wie die Dioden-Brückenschaltung 22 der ersten Ausführungsform und ermöglicht eine einheitliche Laufrichtung des elektronisch kommutierten Motors 12 unabhängig von der Anschlussrichtung, hat jedoch geringere Verluste als die Dioden-Brückenschaltung 22.

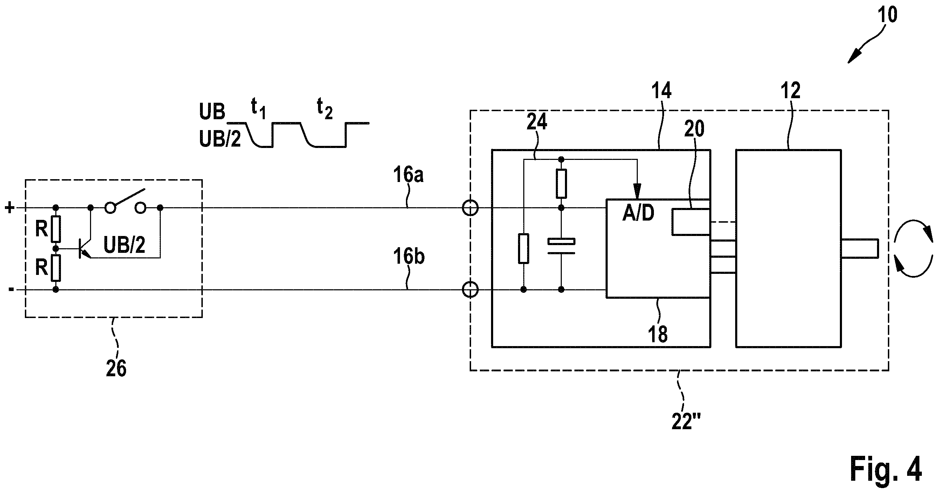

Fig. 4 zeigt eine dritte Ausführungsform der vorliegenden Erfindung. Hierbei ist eine Modulationsschaltung 26 vorgesehen, mittels welcher das an den Anschlussleitungen 16a, 16b anliegende Signal moduliert werden kann, um über die Kommunikationsleitung 24 Anweisungen an die Steuereinheit 14 zu senden. Mittels des dargestellten Schalters oder mittels eines Steuergeräts kann die an den Anschlussleitungen 16a, 16b anliegende Spannung somit zeitkodiert zwischen der Betriebsspannung UB und der halben Betriebsspannung UB/2 hin- und hergeschaltet werden, wie in Fig. 3 gezeigt.

Derartige Anweisungen können beispielsweise eine Änderung einer maximalen Drehzahl oder Leistung des elektronisch kommutierten Motors 12 bewirken, oder die Drehrichtung des elektronisch kommutierten Motors 12 ändern.

Als Beispiel für eine derartige zeitkodierte Power Line Kommunikation kann zunächst eine Initialisierungssequenz festgelegt sein, bei der für 50ms die an den Anschlussleitungen 16a, 16b anliegende Spannung von UB auf UB/2 geschaltet wird und nach diesem Puls wieder für mehr als 200ms die volle Betriebsspannung UB anliegt. Nach der Initialisierung kann dann die Drehrichtung eingestellt werden, indem beispielsweise für eine Drehrichtung rechts für 50ms auf UB/2 geschaltet wird, und für Drehrichtung links für 100ms auf UB/2 geschaltet wird. Die Leistung kann durch mehrfaches, alternierendes Umschalten zwischen UB und UB/2 eingestellt werden, wobei das Verhältnis der Pulslängen von UB und UB/2 der gewünschten Leistung (im Bereich zwischen 0,25 und 1,0 der maximalen Leistung) entspricht.

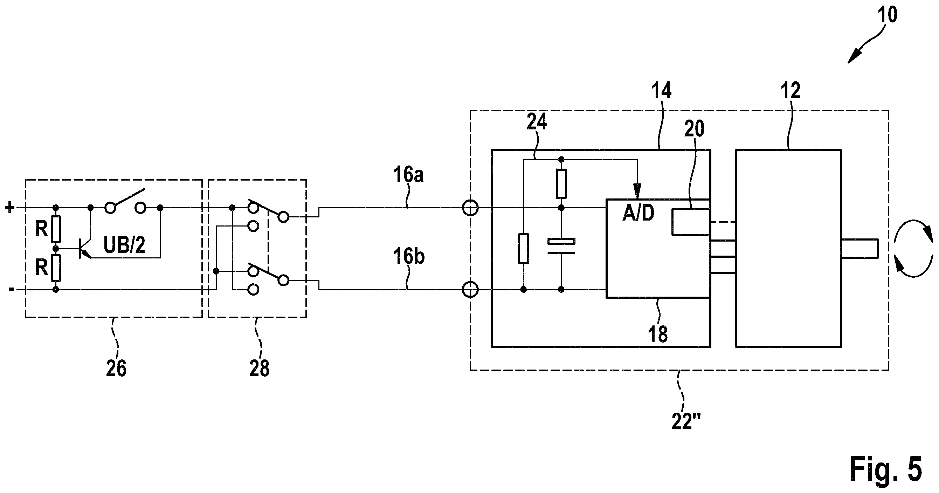

Bei der in Fig. 5 dargestellten vierten Ausführungsform der vorliegenden Erfindung ist zusätzlich zu den Merkmalen der dritten Ausführungsform noch ein Drehrichtungsschalter 28 vorgesehen, mittels dessen die Drehrichtung des elektronisch kommutierten Motors 12 geändert werden kann, indem die Anschlussrichtung der Anschlussleitungen 16a, 16b geändert wird.

## Patentansprüche

1. Elektrische Motoreinheit (10), umfassend:
- ein Gehäuse (11);
- einen in dem Gehäuse (11) aufgenommenen elektronisch kommutierten Motor (12); und
- eine Steuereinheit (14), um eine an die Motoreinheit (10) angelegte Versorgungsgleichspannung in Phasenspannungen zum Ansteuern des elektronisch kommutierten Motors (12) umzuwandeln,
wobei die Steuereinheit (14) eine in die Gleichspannung kodierte Information empfängt und den elektronisch kommutierten Motor (12) abhängig von der Information ansteuert,
wobei die Motoreinheit (10) die Versorgungsgleichspannung über Anschlussleitungen erhält, wobei die Steuereinheit (14) die Versorgungsgleichspannung auf den Anschlussleitungen mit einem Signal moduliert, dessen Frequenz von der Drehzahl des elektronisch kommutierten Motors (12) abhängt.

2. Elektrische Motoreinheit (10) nach Anspruch 1, **dadurch gekennzeichnet, dass** eine Umkehr der Polarität der Versorgungsgleichspannung eine Umkehr der Drehrichtung des elektronisch kommutierten Motors (12) bewirkt.

3. Elektrische Motoreinheit (10) nach Anspruch 1 oder 2, **dadurch gekennzeichnet, dass** die Information durch das Vorzeichen und/oder durch die Spannungshöhe der Versorgungsgleichspannung angegeben sind.

4. Elektrische Motoreinheit (10) nach einem der Ansprüche 1 bis 3, **dadurch gekennzeichnet, dass** die Frequenz des Signals proportional zu der Drehzahl des elektronisch kommutierten Motors (12) ist.

5. Elektrische Motoreinheit (10) nach einem der Ansprüche 1 bis 4, **dadurch gekennzeichnet, dass** die Steuereinheit (14) die Drehzahl des elektronisch kommutierten Motors (12) auf einen Maximalwert begrenzt.

6. Elektrische Motoreinheit (10) nach Anspruch 5, **dadurch gekennzeichnet, dass** die Steuereinheit (14) die Begrenzung der Drehzahl durch Begrenzung der mittleren Spannung der Phasenspannungen durchführt.

7. Elektrische Motoreinheit (10) nach Anspruch 5, **dadurch gekennzeichnet, dass** die Steuereinheit (14) die Begrenzung der Drehzahl durch Begrenzung des bestromten Anteils der Phasenspannungen durchführt.

8. Elektrische Motoreinheit (10) nach einem der Ansprüche 1 bis 7, **dadurch gekennzeichnet, dass** die Phasenspannungen jeweils einen trapezförmigen Spannungsverlauf aufweisen.

9. Elektrische Motoreinheit (10) nach einem der Ansprüche 1 bis 8, **dadurch gekennzeichnet, dass** ein Hall-Sensor (20) zur Lageerkennung und Drehzahlbestimmung des elektronisch kommutierten Motors (12) vorgesehen ist.

10. Verfahren zum Betrieb eines elektronisch kommutierten Motors (12), umfassend:
- Umwandeln einer an die Motoreinheit angelegte Versorgungsgleichspannung in Phasenspannungen zum Ansteuern des elektronisch kommutierten Motors (12);
- Empfangen einer in die Gleichspannung kodierte Information; und
- Ansteuern des elektronisch kommutierten Motors (12) abhängig von der Information;
- wobei die Motoreinheit (10) die Versorgungsgleichspannung über Anschlussleitungen erhält, wobei die Steuereinheit (14) die Versorgungsgleichspannung auf den Anschlussleitungen mit einem Signal moduliert, dessen Frequenz von der Drehzahl des elektronisch kommutierten Motors (12) abhängt.

## Claims

1. Electric motor unit (10), comprising:
- a housing (11);
- an electronically commutated motor (12) accommodated in the housing (11); and
- a control unit (14), in order to convert a DC supply voltage applied to the motor unit (10) into phase voltages for driving the electronically commutated motor (12),
wherein the control unit (14) receives information encoded in the DC voltage and drives the electronically commutated motor (12) depending on the information, wherein the motor unit (10) receives the DC supply voltage via connection lines, wherein the control unit (14) modulates the DC supply voltage onto the connection lines by way of a signal whose frequency depends on the rotational speed of the electronically commutated motor (12).

2. Electric motor unit (10) according to Claim 1, **characterized in that** a reversal of the polarity of the DC supply voltage causes a reversal of the direction of rotation of the electronically commutated motor (12).

3. Electric motor unit (10) according to Claim 1 or 2, **characterized in that** the information is given by the sign and/or by the voltage level of the DC supply voltage.

4. Electric motor unit (10) according to one of Claims 1 to 3, **characterized in that** the frequency of the signal is proportional to the rotational speed of the electronically commutated motor (12).

5. Electric motor unit (10) according to one of Claims 1 to 4, **characterized in that** the control unit (14) limits the rotational speed of the electronically commutated motor (12) to a maximum value.

6. Electric motor unit (10) according to Claim 5, **characterized in that** the control unit (14) carries out the limitation of the rotational speed by limiting the average voltage of the phase voltages.

7. Electric motor unit (10) according to Claim 5, **characterized in that** the control unit (14) carries out the limitation of the rotational speed by limiting the energized component of the phase voltages.

8. Electric motor unit (10) according to one of Claims 1 to 7, **characterized in that** the phase voltages each have a trapezoidal voltage profile.

9. Electric motor unit (10) according to one of Claims 1 to 8, **characterized in that** a Hall sensor (20) is provided for identifying the position and determining the rotational speed of the electronically commutated motor (12).

10. Method for operating an electronically commutated motor (12), comprising:
- conversion of a DC supply voltage applied to the motor unit into phase voltages for driving the electronically commutated motor (12);
- reception of information encoded in the DC voltage; and
- driving of the electronically commutated motor (12) depending on the information;
- wherein the motor unit (10) receives the DC supply voltage via connection lines, wherein the control unit (14) modulates the DC supply voltage onto the connection lines by way of a signal whose frequency depends on the rotational speed of the electronically commutated motor (12).

## Revendications

1. Unité à moteur électrique (10) comprenant :
- un boîtier (11) ;
- un moteur à commutation électronique (12) logé dans ledit boîtier (11) ; et
- une unité de commande (14) permettant de convertir une tension d'alimentation continue appliquée à l'unité à moteur (10) en des tensions de phase destinées à commander le moteur à commutation électronique (12), dans laquelle l'unité de commande (14) reçoit des informations codées dans la tension continue et commande le moteur à commutation électronique (12) en fonction desdites informations,
dans laquelle l'unité à moteur (10) reçoit la tension d'alimentation continue par l'intermédiaire de câbles de raccordement, dans laquelle l'unité de commande (14) module la tension d'alimentation continue sur les lignes de raccordement avec un signal dont la fréquence dépend de la vitesse de rotation du moteur à commutation électronique (12).

2. Unité à moteur électrique (10) selon la revendication 1, **caractérisée en ce qu'**une inversion de la polarité de la tension d'alimentation continue provoque une inversion du sens de rotation du moteur à commutation électronique (12).

3. Unité à moteur électrique (10) selon la revendication 1 ou 2, **caractérisée en ce que** l'information est indiquée par le signe et/ou par le niveau de tension de la tension d'alimentation continue.

4. Unité à moteur électrique (10) selon l'une des revendications 1 à 3, **caractérisée en ce que** la fréquence du signal est proportionnelle à la vitesse de rotation du moteur à commutation électronique (12).

5. Unité à moteur électrique (10) selon l'une des revendications 1 à 4, **caractérisée en ce que** l'unité de commande (14) limite la vitesse de rotation du moteur à commutation électronique (12) à une valeur maximale.

6. Unité à moteur électrique (10) selon la revendication 5, **caractérisée en ce que** l'unité de commande (14) effectue la limitation de la vitesse de rotation en limitant la tension moyenne des tensions de phase.

7. Unité à moteur électrique (10) selon la revendication 5, **caractérisée en ce que** l'unité de commande (14) effectue la limitation de la vitesse de rotation en limitant la fraction alimentée des tensions de phase.

8. Unité à moteur électrique (10) selon l'une des revendications 1 à 7, **caractérisée en ce que** les tensions de phase présentent chacune une courbe de tension trapézoïdale.

9. Unité à moteur électrique (10) selon l'une des revendications 1 à 8, **caractérisée en ce qu'**il est prévu un capteur à effet Hall (20) pour la détection de position et la détermination de la vitesse de rotation du moteur à commutation électronique (12).

10. Procédé pour le fonctionnement d'un moteur à commutation électronique (12) consistant à :
- convertir une tension d'alimentation continue appliquée à l'unité à moteur en des tensions de phase pour commander le moteur à commutation électronique (12) ;
- recevoir des informations codées dans la tension continue ; et
- commander le moteur à commutation électronique (12) en fonction desdites informations ;
- dans lequel l'unité à moteur (10) reçoit la tension d'alimentation continue par l'intermédiaire de lignes de raccordement, dans lequel l'unité de commande (14) module la tension d'alimentation continue sur les lignes de raccordement avec un signal dont la fréquence dépend de la vitesse de rotation du moteur à commutation électronique (12).
